# EUROPÄISCHE PATENTSCHRIFT

(11) **EP 1 809 091 B1**
(45) Veröffentlichungstag und Bekanntmachung des Hinweises auf die Patenterteilung: **28.07.2010**
(21) Anmeldenummer: 05807603.5
(22) Anmeldetag: 14.11.2005
(51) Int. Cl.: A01G 3/06

(54) **SCHNEIDGERÄT**
CUTTING APPLIANCE
APPAREIL DE COUPE

(30) Priorität: 13.11.2004 DE 102004054948
(43) Veröffentlichungstag der Anmeldung: 25.07.2007
(73) Patentinhaber: GARDENA Manufacturing GmbH, 89079 Ulm (DE)
(72) Erfinder: KOHL, Peter, 89267 Illertissen (DE)
(86) Internationale Anmeldenummer: PCT/EP2005/012163
(87) Internationale Veröffentlichungsnummer: WO 2006/050981

(56) Entgegenhaltungen:
- DE-A1- 2 839 780
- GB-A- 1 593 959
- US-A- 3 851 388
- US-A- 3 958 331
- US-A- 3 959 878

## Beschreibung

Die Erfindung betrifft ein Schneidgerät mit einer austauschbaren Messeranordnung, welche zwei oszillierend relativ zueinander bewegbare Messer enthält.

Derartige Schneidgeräte sind beispielsweise Grasscheren mit relativ zueinander um einen kleinen Winkel verdrehbaren Messern oder Strauch- oder Heckenscheren mit langgestreckten Messern, die linear relativ zueinander verschiebbar sind. Der Antrieb erfolgt typischerweise motorisch, vorzugsweise durch einen Elektromotor. Die beiden Messer der Messeranordnung sind in der Regel für den Benutzer unlösbar zu einer Einheit verbunden und die Messeranordnung wird beim Austausch als eine Baueinheit gehandhabt. Die Messerbewegung erfolgt typischerweise über eine Exzenterkupplung, wobei eine geräteseitige Exzenterkurbel als antriebsseitiges Kupplungselement in eine Aussparung eines Messers als zweitem Kupplungselement ragt. Beim Einsetzen der Messeranordnung in das Gerät müssen das messerseitige und das antriebsseitige Kupplungselement in übereinstimmende Positionen gebracht werden, um einen gegenseitigen Eingriff der Kupplungselemente in einer quer zur Antriebsrichtung verlaufenden Eingriffsrichtung zu ermöglichen. Dies ist für den Benutzer zum einen umständlich und u.U. auch mit Verletzungsgefahr verbunden.

Die US 3,851,388 beschreibt eine motorisch angetriebene Schere mit einer von dem Gerätegehäuse abnehmbaren Messeranordnung. Die Messeranordnung ist in einem eigenen Gehäuse gehalten und besitzt ein feststehendes Messer und ein relativ zu diesem quer verschiebbares Messer. Die Messeranordnung ist in einer Aufsteckrichtung, welche parallel zu der Schneidebene und senkrecht zur Bewegungsrichtung des beweglichen Messers verläuft, auf das Gerätegehäuse aufsteckbar. Eine Kupplungsanordnung zwischen der Antriebsvorrichtung im Gerätegehäuse und dem beweglichen Messer im Messergehäuse ist durch ein Armende eines oszillierend geschwenkten Armes im Gerätegehäuse einerseits und eine in Aufsteckrichtung weisende Öffnung an dem beweglichen Messer gegeben. Um das Ausrichten der Öffnung auf das Armende vor dem Aufstecken der Messeranordnung auf das Gerätegehäuse zu vereinfachen, ist die Öffnung durch zwei schräge Flächen in Richtung des Gerätegehäuses aufgeweitet, so dass eine ungefähre Vorausrichtung zwischen der Öffnung und dem Armende ausreicht. Eine solche ungefähre Ausrichtung ist erforderlichenfalls vor dem Zusammensetzen manuell durch Verschieben des beweglichen Messer herzustellen.

In der DE 28 39 780 A1 ist ein elektrisches Schneidgerät beschrieben, bei welchem eine Messeranordnung mit einem Obermesser und einem Untermesser, welche fest miteinander verbunden und relativ zueinander verschwenkbar sind, lösbar in das Gerätegehäuse einsetzbar ist. Die Messeranordnung ist im Gehäuse durch ein Bodenvorsatzstück gehalten, welches über eine Federrastverbindung von unten auf zwei Bolzen des Gerätegehäuses aufgesteckt ist.

Der Erfindung liegt die Aufgabe zugrunde, ein Schneidgerät der eingangs genannten Art anzugeben, bei welchem der Einsatz einer Messeranordnung vereinfacht ist.

Die Erfindung ist im Patentanspruch 1 beschrieben. Die abhängigen Ansprüche enthalten vorteilhafte Ausgestaltungen und Weiterbildungen der Erfindung. Wesentlich bei der vorliegenden Erfindung ist, dass beim Einsatz einer Messeranordnung in das Gerät die aktuellen Positionen von erstem und zweitem Kupplungselement in Antriebsrichtung nicht übereinstimmen müssen und die Messeranordnung auch bei nicht gegebener Positionsübereinstimmung die Messeranordnung eingesetzt werden kann, wobei wenigstens eines der Kupplungselemente entgegen einer Rückstellkraft in eine ausgerückte Stellung quer zur Antriebsrichtung verschoben wird. Bei nachfolgendem Start der Antriebsvorrichtung gelangt das antriebsseitige Kupplungselement in eine mit dem messerseitigen zweiten Kupplungselement übereinstimmende Position und die Kupplungselemente rücken unter dem Einfluss der Rückstellkraft in ihre Eingriffsstellung. Das Einrücken in die Eingriffstellung erfolgt in bevorzugter Ausführung innerhalb weniger als einem Bewegungszyklus bzw. weniger als einer Umdrehung einer antreibenden Exzenterkurbel. Das Einsetzen der Messeranordnung in das Gerät erfolgt vorzugsweise zumindest teilweise mit einer Bewegungskomponente parallel zur Eingriffsrichtung der Kupplungselemente.

Das erste Kupplungselement ist vorzugsweise in Übereinstimmung mit gebräuchlichen Schneidgeräten mit Exzenterkupplungen ein exzentrisch zu einer Antriebswelle angeordnetes und eine Kreisbewegung um die Antriebswelle ausführendes Mitnehmerelement, insbesondere ein Bolzen oder eine Scheibe, welches in eine Aussparung als zweiten Kupplungselement auf Seiten der Messeranordnung eingreift, wobei die Eingriffsrichtung parallel zur Drehachse der Antriebswelle verläuft und die Kupplungselemente in Eingriffsrichtung überlappen. Die Kraftübertragung erfolgt quer, insbesondere im wesentlichen senkrecht zur Eingriffsrichtung. Die Richtung der Kraftübertragung zwischen erstem und zweitem Kupplungselement sei nachfolgend auch als Antriebsrichtung bezeichnet.

Anstelle der Exzenterkupplungen sind auch andere geeignete Kupplungsvorrichtungen oder Antriebsvorrichtungen zur Erzeugung oszillierender Bewegungen bekannt.

Das Gerät kann in einer ersten vorteilhaften Ausführungsform eine motorbetriebene Grasschere sein mit einer Messeranordnung, bei welcher zwei Messer um eine senkrecht zur Schneidebene verlaufende Schwenkachse relativ zueinander um einen kleinen Winkel von typischerweise weniger als 30° schwenkbar sind.

In anderer vorteilhafter Ausführungsform ist das Gerät eine Strauch- oder Heckenschere mit einer vom Gerätegehäuse weg lang gestreckten Messeranordnung, deren Messer relativ zueinander in Längsrichtung linear verschiebbar geführt rind.

Vorzugsweise ist eines der Messer der Messeranordnung bezüglich des Gerätegehäuses im Betrieb feststehend.

Die Erfindung ist nachfolgend anhand bevorzugter Ausführungsbeispiele unter Bezugnahme auf die Abbildungen noch eingehend veranschaulicht. Dabei zeigt:
- Fig. 1: eine Draufsicht auf eine Messeranordnung,
- Fig. 2: eine Seitenansicht der Messeranordnung nach Fig. 1,
- Fig. 3: eine Schrägansicht eines Exzenterantriebsrads,
- Fig. 4: eine axiale Ansicht auf das Antriebsrad nach Fig. 4,

- Fig. 5: einen Schnitt durch das Antriebsrad nach Fig. 4,
- Fig. 6: eine Seitenansicht einer zusammengesetzten Anordnung bei nicht übereinstimmenden Positionen der Kupplungselemente,
- Fig. 7: eine Draufsicht auf die Anordnung nach Fig. 6,
- Fig. 8: eine Seitenansicht mit in Eingriffspositionen befindlichen Kupplungselementen.

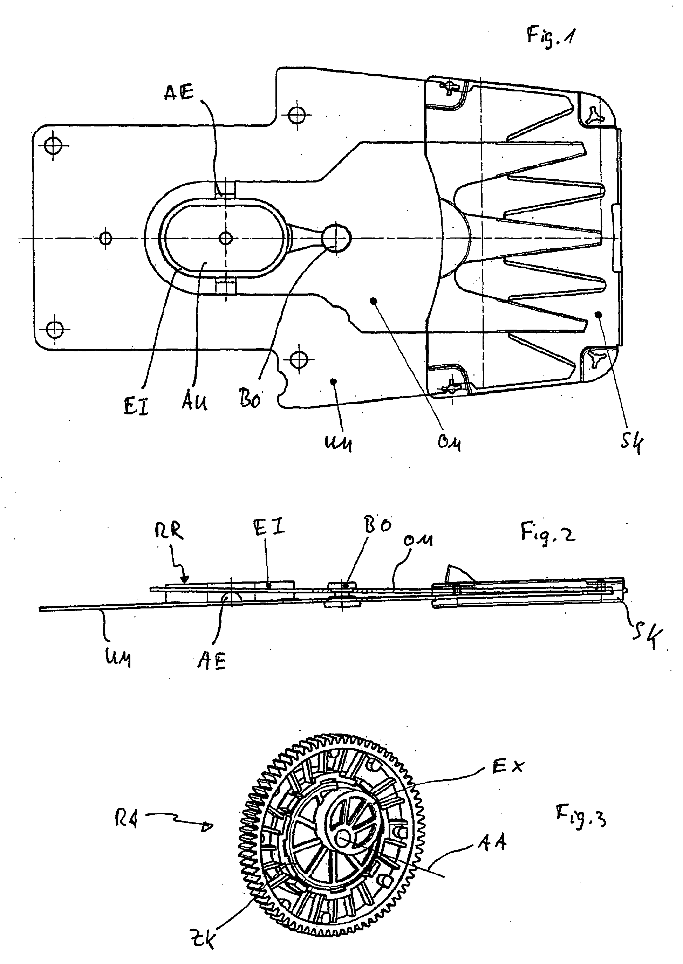

In Fig. 1 und Fig. 2 ist eine Messeranordnung einer motorisch angetriebenen Handgrasschere skizziert, welche in an sich gebräuchlicher Weise ein im Gehäuse festgelegtes Untermesser UM und ein relativ zu diesem um einen Bolzen BO als Schwenkgelenk um einen geringen Winkel oszillierend schwenkbares Obermesser OM aufweist. Die Messeranordnung bildet für den Benutzer eine einheitlich handhabbar Baueinheit. In der Skizze sind die Messerzähne durch eine Schutzkappe SK abgedeckt. Auf der den Messerzähnen abgewandten Seite des Bolzens sind die Messer durch ein Abstandselement AE voneinander beabstandet. Durch den Bolzen BO sind die Messer senkrecht zu den Messerebenen gegeneinander verspannt. Das Abstandselement ist vorzugsweise Teil eines Einsatzelements EI in einer Aussparung des Obermessers. Das Einsatzelement weist seinerseits eine annähernd ovale Aussparung AU auf. Das Einsatzelement besteht vorteilhafterweise aus Kunststoff und gleitet bei der oszillierenden Bewegung auf dem Untermesser. Das Einsatzelement ragt über das Obermesser mit einem vorzugsweise die Aussparung vollständig umgebenden Rand RR hinaus. Das Einsatzelement dient mit der Aussparung AU als messerseitiges zweites Kupplungselement einer Exzenterkupplung, in welche ein antriebsseitiges erstes Kupplungselement lösbar in Eingriffsrichtung ER eingreift. Die Antriebsrichtung bzw. Kraftübertragungsrichtung der Kupplung verläuft im wesentlichen tangential bezüglich der Schwenkbewegung um den Bolzen bzw. senkrecht zu einer durch die Aussparung führenden Radiuslinie RL.

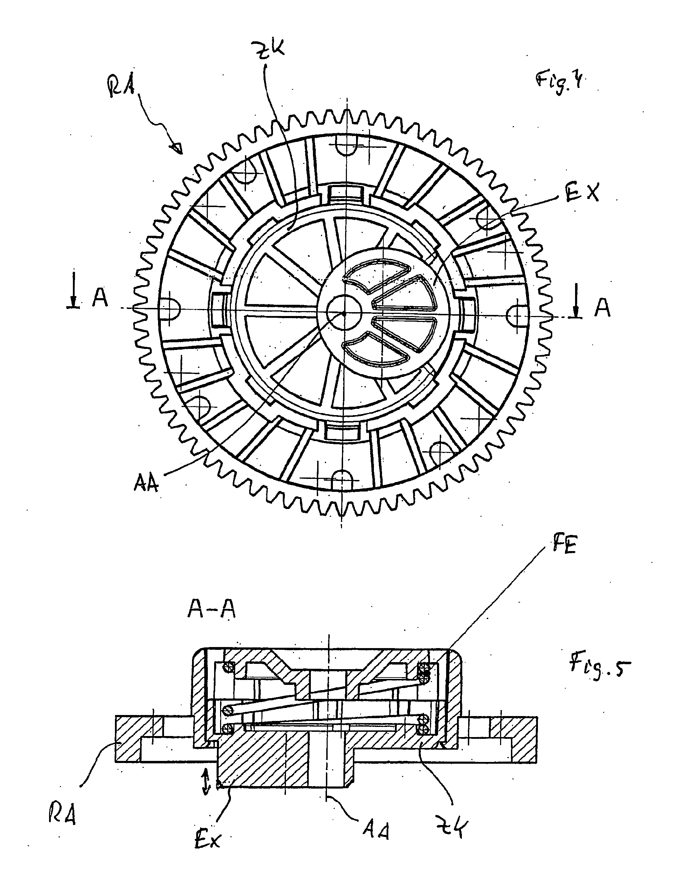

In Fig. 3 ist in Schrägansicht eine bevorzugte Ausführung eines Exzenter-Antriebselements skizziert, bei welchem ein am Außenumfang gezahntes Antriebsrad RA um eine Antriebsachse AA drehbar ist und gegen die Antriebsachse radial versetzt eine kreisrunde Exzenterscheibe EX als Mitnehmerelement bzw. erstes Kupplungselement trägt. Für den Antrieb kämmt ein nicht mit eingezeichnetes Ritzel, welches z.B. unmittelbar auf der Motorachse eines Antriebsmotors angeordnet sein kann, mit der Außenverzahnung des Antriebsrads. Exzenterscheibe EX und Aussparung AU sind so dimensioniert, dass sie mit in bezüglich der Schwenkbewegung um den Bolzen tangentialer Antriebsrichtung geringem Spiel in Eingriffsrichtung überlappend ineinander greifen können. Fig. 4 zeigt eine axiale Ansicht des Antriebsrads. Die Antriebsachse AA liegt vorteilhafterweise innerhalb des Umfangs der Exzenterscheibe. Die Exzenterscheibe ist Teil eines Zentralkörpers ZK, welcher drehfest, aber axial verschiebbar mit dem Antriebsrad gekoppelt ist.

Wie in dem Querschnitt durch das Antriebsrad RA in Fig. 5 veranschaulicht, ist der Zentralkörper mit der Exzenterscheibe EX parallel zur Drehachse AA des Rads RA entgegen der Rückstellkraft einer Feder FE aus einer mit durchgezogener Linie gezeichneten Normalstellung in eine ausgerückte Stellung verschiebbar. Die Exzenterscheibe kann auch direkt in dem Antriebsrad axial verschiebbar gehalten sein. Der radial größere Zentralkörper bietet aber vorteilhafterweise mehr Platz für die Druckfeder FE.

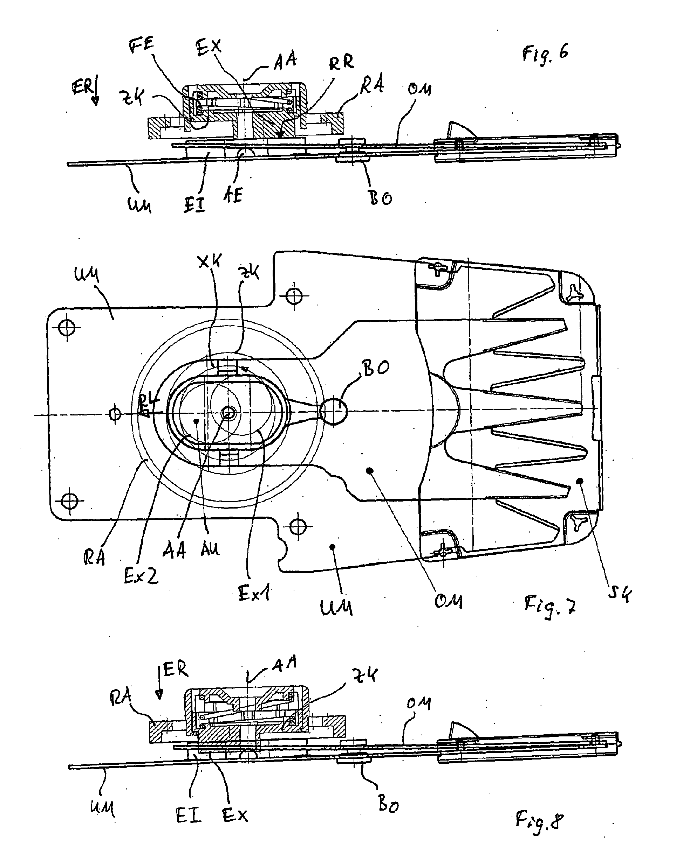

Fig. 6 zeigt in Seitenansicht eine aus einer Messeranordnung nach Fig. 1, Fig. 2 und einem Antriebselement nach Fig. 3 bis Fig. 5 in einem Gerät zusammengesetzte Anordnung, wobei die übrigen Geräteteile, welche die gezeigten Elemente in der skizzierten Position zusammenhalten, der Übersicht halber nicht mit eingezeichnet sind. In Fig. 6 ist angenommen, dass beim Einsetzen und Arretieren der Messeranordnung im Gerät die Positionen der Exzenterscheibe EX und der Aussparung AU in Antriebsrichtung nicht übereingestimmt haben, wie in Fig. 7 in axialer Ansicht als Position Ex1 veranschaulicht, und dass deshalb die Exzenterscheibe EX auf dem als Anlagefläche dienenden Rand RR des Einsatzelements EI aufliegt und entgegen der Rückstellkraft der Feder FE parallel zu Drehachse AA und Eingriffsrichtung ER in die ausgerückte Stellung verschoben ist.

Fig. 7 zeigt in Draufsicht auf die Messeranordnung in Richtung der Antriebsachse des Antriebsrads schematisch dessen bezüglich des Gerätegehäuses und des Untermesser UM feststehende Umrissposition und konzentrisch hierzu den ungefähren Umriss des Zentralkörpers ZK. Ferner ist eine Kreislinie XK als äußere Begrenzung der von der Exzenterscheibe überstrichenen Kreisfläche um die Antriebsachse eingezeichnet.

Beim Einschalten des Antriebs wird das Antriebsrad RA um die Antriebsachse AA gedreht und die Exzenterscheibe gleitet auf dem Rand RR bis zu einer in Fig. 7 mit Ex2 bezeichneten Position, in welcher Übereinstimmung mit der Position der Aussparung EA in Antriebsrichtung besteht. In dieser übereinstimmenden Position rückt die Exzenterscheibe unter der Einwirkung der Rückstellkraft der Feder FE parallel zu Achse AA und Eingriffsrichtung ER in die Aussparung AU ein und die Kupplungselemente befinden sind wie in Fig. 8 in Seitenansicht skizziert im Kupplungseingriff. Der der Messeranordnung zuweisende Rand der Exzenterscheibe ist vorteilhafterweise angefast wie aus Fig. 5 ersichtlich.

Bei dem skizzierten bevorzugten Ausführungsbeispiel erfolgt der Kupplungseingriff immer in weniger als einer Umdrehung des Antriebsrads und somit in einer für den Benutzer kaum wahrnehmbaren kurzen Zeitspanne ab dem Einschalten des Geräts. Es zeigt sich, dass auch bei einer Messeranordnung, welche anstelle der ovalen Aussparung in dem bezüglich des Obermessers feststehenden Einsatzelement ein relativ zu dem Obermesser begrenzt verschiebbares Einsatzelement mit kreisrunder, der Exzenterscheibe angepasster Aussparung gegeben ist, ein automatisches Eingreifen der Kupplungselemente in kurzer Zeit erfolgt.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise abwandelbar.

## Patentansprüche

1. Schneidgerät mit einer austauschbaren Messeranordnung, welche zwei oszillierend relativ zueinander bewegbare Messer (OM, UM) enthält, mit einer Kupplungsanordnung und einer Antriebsvorrichtung, welche über die Kupplungsanordnung in wenigstens einer Antriebsrichtung eine Antriebskraft auf eines der Messer ausübt, wobei die Kupplungsanordnung ein erstes Kupplungselement (EX) auf Seiten der Antriebsvorrichtung und ein zweites Kupplungselement (EI) auf Seiten der Messeranordnung umfasst, welche in einer Eingriffsrichtung (ER) quer zur Antriebsrichtung überlappend ineinandergreifen können, **dadurch gekennzeichnet, dass** wenigstens eines der Kupplungselemente (EX) in Eingriffsrichtung (ER) entgegen einer Rückstellkraft in eine ausgerückte Stellung verschiebbar ist, dass die Messeranordnung (OM, UM) ohne Herstellung des gegenseitigen Eingriffs der Kupplungselemente (EX, EI) unter Verschiebung des wenigstens einen Kupplungselements (EX) entgegen der Rückstellkraft in das Gerät einsetzbar ist, dass danach die Kupplungselemente (EX, EI) relativ zueinander in Antriebsrichtung bewegbar sind und dass ein Kupplurigselement unter der Einwirkung der Rückstellkraft automatisch in die Eingriffsstellung mit dem anderen Kupplungselement einrückt.

2. Schneidgerät nach Anspruch 1, **dadurch gekennzeichnet, dass** das erste Kupplungselement (EX) eine Kreisbewegung um eine Antriebsachse (AA) ausführt.

3. Schneidgerät nach Anspruch 1 oder 2, **dadurch gekennzeichnet, dass** das zweite Kupplungselement durch eine Aussparung zur Aufnahme des ersten Kupplungselements gebildet ist.

4. Schneidgerät nach Anspruch 3, **dadurch gekennzeichnet, dass** das zweite Kupplungselement von einer Auflagefläche (ER) umgeben ist und das erste Kupplungselement (EX) in ausgerückter Stellung auf der Auflagefläche aufliegt und gleitet.

5. Schneidgerät nach einem der Ansprüche 2 bis 4, **dadurch gekennzeichnet, dass** das erste Kupplungselement (EX) die Antriebsachse (AA) umfasst.

6. Schneidgerät nach einem der Ansprüche 1 bis 5, **dadurch gekennzeichnet, dass** die Messer der ersten Messeranordnung um einen Bolzen (BO) relativ zueinander verdrehbar sind.

7. Schneidgerät nach einem der Ansprüche 1 bis 5, **dadurch gekennzeichnet, dass** die Messer der Messeranordnung linear relativ zueinander verschiebbar sind.

8. Schneidgerät nach einem der Ansprüche 1 bis 7, **dadurch gekennzeichnet, dass** ein Messer der Messeranordnung relativ zum Gerät feststehend ist.

## Claims

1. Cutting tool having an exchangeable blade arrangement containing two blades (OM, UM) which can be moved relative to each other in an oscillating motion, having a clutch arrangement and a drive apparatus which via the clutch arrangement, in at least one drive direction, applies a drive force to one of the blades, wherein the clutch arrangement comprises a first clutch element (EX) on the part of the drive apparatus and a second clutch element (EI) on the part of the blade arrangement, which clutch elements can intermesh in an overlapping manner in an engagement direction (ER) transversely to the drive direction, **characterized in that** at least one of the clutch elements (EX) is displaceable in the engagement direction (ER) counter to a restoring force into a disengaged setting, **in that** the blade arrangement (OM, UM) can be inserted into the tool without establishing the mutual engagement of the clutch elements (EX, EI), with the displacement of at least one clutch element (EX) counter to the restoring force, **in that** the clutch elements (EX, EI) can thereafter be moved relative to each other in the drive direction, and **in that** a clutch element, under the action of the restoring force, engages automatically into the engagement setting with the other clutch element.

2. Cutting tool according to Claim 1, **characterized in that** the first clutch element (EX) performs a circular motion about a drive axis (AA).

3. Cutting tool according to Claim 1 or 2, **characterized in that** the second clutch element is formed by a recess for the reception of the first clutch element.

4. Cutting tool according to Claim 3, **characterized in that** the second clutch element is surrounded by a support surface (ER), and the first clutch element (EX) in the disengaged setting rests and slides on the support surface.

5. Cutting tool according to one of Claims 2 to 4, **characterized in that** the first clutch element (EX) comprises the drive axis (AA).

6. Cutting tool according to one of Claims 1 to 5, **characterized in that** the blades of the blade arrangement can be twisted relative to each other about a bolt (BO).

7. Cutting tool according to one of Claims 1 to 5, **characterized in that** the blades of the blade arrangement are linearly displaceable relative to one another.

8. Cutting tool according to one of Claims 1 to 7, **characterized in that** a blade of the blade arrangement is fixed relative to the tool.

## Revendications

1. Appareil de coupe comprenant un agencement de couteaux remplaçables qui contient deux couteaux (OM, UM) déplaçables l'un par rapport à l'autre de manière oscillante, avec un agencement d'accouplement et un dispositif d'entraînement, qui exerce par le biais de l'agencement d'accouplement dans au moins une direction d'entraînement une force d'entraînement sur l'un des couteaux, l'agencement d'accouplement comprenant un premier élément d'accouplement (EX) du côté du dispositif d'entraînement et un deuxième élément d'accouplement (EI) du côté de l'agencement de couteaux, lesquels peuvent venir en prise l'un dans l'autre en se chevauchant dans une direction d'engagement (ER) transversalement à la direction d'entraînement, **caractérisé en ce qu'**au moins l'un des éléments d'accouplement (EX) peut être déplacé dans la direction d'engagement (ER) à l'encontre d'une force de rappel dans une position débrayée, **en ce que** l'agencement de couteaux (OM, UM) peut être inséré dans l'appareil sans créer l'engagement mutuel des éléments d'accouplement (EX, EI) en déplaçant l'au moins un élément d'accouplement (EX) à l'encontre de la force de rappel, **en ce que** les éléments d'accouplement (EX, EI) peuvent ensuite être déplacés l'un par rapport à l'autre dans la direction d'entraînement et **en ce qu'**un élément d'accouplement s'embraye automatiquement dans la position d'engagement avec l'autre élément d'accouplement sous l'effet de la force de rappel.

2. Appareil de coupe selon la revendication 1, **caractérisé en ce que** le premier élément d'accouplement (EX) effectue un mouvement circulaire autour d'un axe d'entraînement (AA).

3. Appareil de coupe selon la revendication 1 ou 2, **caractérisé en ce que** le deuxième élément d'accouplement est formé par un évidement pour recevoir le premier élément d'accouplement.

4. Appareil de coupe selon la revendication 3, **caractérisé en ce que** le deuxième élément d'accouplement est entouré par une surface d'appui (ER) et le premier élément d'accouplement (EX) repose et glisse sur la surface d'appui dans la position débrayée.

5. Appareil de coupe selon l'une quelconque des revendications 2 à 4, **caractérisé en ce que** le premier élément d'accouplement (EX) comprend l'axe d'entraînement (AA).

6. Appareil de coupe selon l'une quelconque des revendications 1 à 5, **caractérisé en ce que** les couteaux du premier agencement de couteaux peuvent être tournés les uns par rapport aux autres autour d'un boulon (BO).

7. Appareil de coupe selon l'une quelconque des revendications 1 à 5, **caractérisé en ce que** les couteaux de l'agencement de couteaux peuvent être déplacés linéairement les uns par rapport aux autres.

8. Appareil de coupe selon l'une quelconque des revendications 1 à 7, **caractérisé en ce qu'**un couteau de l'agencement de couteaux est fixé par rapport à l'appareil.
